# EUROPÄISCHE PATENTSCHRIFT

(11) **EP 3 913 320 B1**
(45) Veröffentlichungstag und Bekanntmachung des Hinweises auf die Patenterteilung: **21.02.2024**
(21) Anmeldenummer: 21170513.2
(22) Anmeldetag: 26.04.2021
(51) Int. Cl.: G01B 3/22, G01B 5/008, G01B 5/016, G01B 21/04, G01B 5/00, B23B 31/02

(54) **KUPPLUNGSELEMENT ZUR AUFNAHME EINER TASTSPITZE IN EINEM TASTMESSGERÄT, SCHRAUBEINSATZ ZUR AUFNAHME EINER TASTSPITZE IN EINEM TASTMESSGERÄT, KUPPLUNGSANORDNUNG FÜR EINEN TASTEINSATZ BEI EINEM TASTMESSGERÄT, TASTMESSGERÄT(-E)**
COUPLING ELEMENT FOR HOLDING A SAMPLING TIP IN A SAMPLING DEVICE, SCREW INSERT FOR HOLDING A SAMPLING TIP IN A SAMPLING DEVICE, COUPLING ARRANGEMENT FOR A SAMPLING INSERT FOR A SAMPLING DEVICE, SAMPLING DEVICE(S)
ÉLÉMENT D'ACCOUPLEMENT DESTINÉ À LA RÉCEPTION D'UNE POINTE DE PALPEUR DANS UN APPAREIL DE MESURE DE TYPE PALPEUR, EMBOUT POUR VIS DESTINÉ À LA RÉCEPTION D'UNE POINTE DE PALPEUR DANS UN APPAREIL DE MESURE DE TYPE PALPEUR, AGENCEMENT D'ACCOUPLEMENT POUR UN PALPEUR DANS UN APPAREIL DE MESURE DE TYPE PALPEUR, APPAREIL DE MESURE DE TYPE PALPEUR

(30) Priorität: 18.05.2020 DE 102020113401
(43) Veröffentlichungstag der Anmeldung: 24.11.2021
(60) Teilanmeldung: 24151808.3
(73) Patentinhaber: Haimer GmbH, 86568 Hollenbach-Igenhausen (DE)
(72) Erfinder: Haimer, Andreas, 86568 Hollenbach-Igenhausen (DE); Haimer, Franz, 86568 Hollenbach-Igenhausen (DE); Haimer, Franz-Josef, 86568 Hollenbach-Igenhausen (DE)

(56) Entgegenhaltungen:
- CH-A2- 714 193
- DE-A1-102015 002 943
- US-A1- 2018 299 061

## Beschreibung

Die Erfindung wird durch die unabhängigen Ansprüche definiert, die Tastmessgeräte definieren.

Die Erfindung betrifft ein Kupplungselement zur Aufnahme einer Tastspitze in einem Tastmessgerät, einen Schraubeinsatz zur Aufnahme einer Tastspitze in einem Tastmessgerät, eine Kupplungsanordnung für einen Tasteinsatz bei einem Tastmessgerät sowie ein bzw. Tastmessgeräte.

Ein Tastmessgerät, beispielsweise ein Mehrkoordinaten-Tastmessgerät, kurz auch nur als 3D Taster bezeichnet, welches Abstandmessungen sowohl in Richtung einer Messachse als auch quer dazu erlaubt, ist beispielsweise aus der WO 02/103282 A1 bekannt.

Dieses Tastmessgerät umfasst ein Gehäuse, an dem ein Tasthebel, manchmal auch als Tastarm bezeichnet, in Richtung einer durch das Gehäuse definierten Messachse verschiebbar geführt ist. Der Tasthebel ist mittels eines Universalgelenks, beispielsweise hier bei der WO 02/103282 A1 in Form eines Kugelgelenks, darüber hinaus um einen auf der Messachse liegenden Schwenkpunkt allseitig schwenkbar an dem Gehäuse geführt und wird von einer Rückstellfeder federnd vorgespannt.

Der Tasthebel hat einen aus dem Gehäuse herausragenden Tasteinsatz, kurz auch anschaulich oft als Tastspitze bezeichnet, dessen freies, durch eine Tastkugel gebildetes Tastende einen in der Ruhestellung des Tasthebels auf der Messachse liegenden Tast-Bezugspunkt definiert.

Bezogen auf den Schwenkpunkt ragt ein Koppelarm des Tasthebels, auch als Messwelle des Tasthebels bezeichnet, entgegengesetzt zum Tasteinsatz in eine kreiszylindrische, zur Messachse zentrische Führungsöffnung des Gehäuses hinein.

Über eine ein Zentrierelement und eine Gewindestange mit Außengewinde aufweisende Verschraubungsanordnung ist der Tasteinsatz, welcher neben der Tastkugel einen Stift, welcher die Tastkugel aufnimmt, und eine Hülse, welche ihrerseits mit dem Stift verbunden ist, aufweist, mit dem Koppelarm verschraubt.

Dazu ist der Tasteinsatz, hier die Hülse des Tasteinsatzes, andererends der Tastkugel in einer entsprechenden Bohrung am in Richtung des Tasteinsatzes liegenden Ende des Zentrierelements gehalten. Das Zentrierelement weist andererends dieses Bohrungsendes ein Innengewinde auf, welches mit der Gewindestange bzw. mit dem Außengewinde der Gewindestange verschraubt ist. Am dem Tasteinsatz abgewandten Ende der Gewindestange ist diese - über ein Außengewinde an der Gewindestange - in einem Innengewinde des Koppelarms verschraubt.

Eine an dem Gehäuse gehaltene Messuhr erfasst die Position der Messwelle bzw. des Tasthebels relativ zu dem Gehäuse.

Durch unsachgemäßen Gebrauch eines solchen Tastmessgeräts im Einsatz kann der Tasteinsatz beschädigt werden, beispielsweise im Bereich der aus Keramik bestehenden und als Sollbruchstelle dienenden (Keramik-)Hülse des Tasteinsatzes brechen. Ein Ersatz bzw. Austausch des Tasteinsatzes ist dann nötig.

Es ist Aufgabe der Erfindung, eine einfache, kostengünstige und schnell wechselbare Kopplung eines Tasteinsatzes in dem Tastmessgerät zu schaffen.

Diese Aufgabe wird gelöst durch ein Kupplungselement zur Aufnahme einer Tastspitze in einem Tastmessgerät, einen Schraubeinsatz zur Aufnahme einer Tastspitze in einem Tastmessgerät, eine Kupplungsanordnung für einen Tasteinsatz bei einem Tastmessgerät sowie ein bzw. Tastmessgeräte mit den Merkmalen des jeweiligen unabhängigen Anspruchs. Vorteilhafte Weiterbildungen der Erfindung sind Gegenstand abhängiger Ansprüche sowie der nachfolgenden Beschreibung.

Verwendete Begriffe, wie axial und radial, sind - soweit nicht anders explizit definiert - in Bezug auf eine Messachse eines die erfindungsgemäßen Gegenstände aufweisenden Tastmessgeräts zu verstehen.

Das erfindungsgemäße Kupplungselement weist einerends einen einen ersten Verbindungs-/Kopplungsbereich ausbildenden Zapfen auf.

Dieser Zapfen bildet auf einer äußeren Oberfläche mehrere sich in radialer Umfangsrichtung nicht aneinander anschließende Gewindesegmente aus.

(Auch) Der erfindungsgemäße Schraubeinsatz weist einerends einen ersten Verbindungs-/Kopplungsbereich auf, insbesondere zur Verbindung mit dem Kupplungselement, - mit einer Ausnehmung, auf deren inneren Oberfläche (ebenfalls) mehrere sich in radialer Umfangsrichtung nicht aneinander anschließende Gewindesegmente ausgebildet sind.

Ein (solches) Gewindesegment (- sei es bei dem Kupplungselement oder bei dem Schraubeinsatz -) kann dabei durch eine oder mehrere jeweils einen Teil eines Gewindegangs (Teilgewindegang) ausbildende Vertiefungen gebildet werden (, wobei dann eine solche Vertiefung bzw. einen solchen Teilgewindegang begrenzende "Erhebungen" als Gewindeflanken gesehen - und als solche bezeichnet werden mögen).

Vereinfacht ausgedrückt, - in radialer Umfangsrichtung - zwischen den Gewindesegmenten sind (auf der äußeren Zapfenoberfläche (bei dem Kupplungselement) oder der inneren Ausnehmungsoberfläche (bei dem Schraubeinsatz)) gewindefreie Bereiche bzw. gewindefreie Abschnitte, im Folgenden kurz und vereinfacht als Unterbrechungen bezeichnet, beispielsweise im Wesentliche glatten Teilzylinderoberflächen/-mäntel, ausgebildet.

D.h., anschaulich gesehen, auf der Zapfenoberfläche bzw. inneren Oberfläche der Ausnehmung wechseln sich in radialer Umfangsrichtung die Gewindesegmente (beim Zapfen des Kupplungselements anschaulich gesehen Außengewindesegmente bzw. in der inneren Ausnehmung des Schraubeinsatzes anschaulich gesehen Innengewindesegmente) und die gewindefreien Bereiche bzw. Unterbrechungen ab.

Dieses erweist sich dahingehend als vorteilhaft, kann dadurch ein entsprechendes Gegenstück zum Kupplungselement bzw. zum Schraubeinsatz, beispielsweise der Schraubeinsatz zum Kupplungselement bzw. vice versa, einfach und schnell mit diesem bzw. dieser gekoppelt werden, beispielsweise durch (schnelles) Drehkuppeln, d.h., durch axiales Auf-/Einstecken und dann (Ver-)Drehen.

Hierbei "tauchen" dann - beim axialen Auf-/Einstecken - die Gewindesegmente des einen Elements, beispielsweise des Kupplungselements bzw. die Außengewindesegmente des Kupplungselements, in die Unterbrechungen des anderen Elements (Gegenelement), beispielsweise des Schraubeinsatzes, ein (bzw. vice versa, d.h., die Innengewindesegmente des Gegenelements, beispielsweise des Schraubeinsatzes, tauchen in die Unterbrechungen des Elements, beispielsweise des Kupplungselements, ein) - bis sie dann gegeneinander verdreht werden - wobei dann Außengewindesegmente und Innengewindesegmente ineinander greifen.

Kurz, Kupplungselement und Schraubeinsatz können - durch dieses Dreh-Kuppeln - auf einfache Art und Weise schnell gekoppelt - und miteinander präzise verspannt werden. Die Verbindung - und so die Vorteile des Kupplungselements und/oder Schraubeisatzes - erweist sich als stabiler, besser, insbesondere schneller und spielfrei, zentrierend.

Zweckmäßig ist es hier weiter, wenn die Unterbrechungen - zwischen den Gewindesegmenten - radial gegenüber den Gewindesegmenten zurückgesetzt sind. Anschaulich ausgedrückt, die die Unterbrechungen - zwischen den Gewindesegmenten - liegen - bei dem Kupplungselement - radial weiter innen als die Gewindesegmente bzw. liegen - bei dem Schraubeinsatz - radial weiter außen als die Gewindesegmente. Das axiale Einstecken (von Element und Gegenelement) bzw. "Eintauchen" (der Gewindesegmente in die Unterbrechungen) kann einfacher erfolgen.

Dieses Drehkuppeln kann auch dadurch weiter vereinfacht werden, wenn die Gewindesegmente des einen Elements, beispielsweise des Kupplungselements, und die Unterbrechungen des Gegenelements, beispielsweise des Schraubeinsatzes, insbesondere in ihrer Erstreckung in Umfangsrichtung aneinander angepasst sind. D.h., ist die Erstreckung in Umfangsrichtung der Gewindesegmente (des einen Elements) gleich oder insbesondere kleiner als die Umfangsrichtungserstreckung der Unterbrechungen (des Gegenelements), so können Element und Gegenelement leichter axial gegeneinander verschoben werden bzw. ineinander eintauchen.

Insbesondere zweckmäßig ist es auch, (- sei es bei dem Kupplungselement oder bei dem Schraubeinsatz -) wenn die Steigungsverläufe bei allen die Teilgewindegänge ausbildenden Vertiefungen gleich sind.

Dadurch lässt sich ein klemmungsfreies Kuppeln des Kupplungselements bzw. des Schraubeinsatzes mit einem entsprechenden Gegenstück, beispielsweise von dem Kupplungselement und dem Schraubeinsatz, ermöglichen.

Vereinfacht bzw. anschaulich ausgedrückt/erklärt, durch gleiche Steigungsverläufe stellt sich an/bei jedem Teilgewindegang derselbe "Hub" ein. Unterschiedliche Hübe können andernfalls zu Klemmungen führen bzw. ein Kuppeln des Kupplungselements bzw. des Schraubeinsatzes mit einem entsprechenden Gegenstück erschweren.

Dabei können aber die - gleichen - Steigungsverläufe selbst wiederum jeweils konstant sein - oder sich ändern, insbesondere degressiv sein.

Insbesondere die degressive Ausgestaltung eines Teilgewindegangs ermöglicht ein (anfänglich) schnelles Greifen bei einer Kopplung des Kupplungselements bzw. des Schraubeinsatzes mit einem entsprechenden Gegenstück, wie beispielsweise beim Drehkuppeln (s. oben).

Darüber hinaus kann auch vorgesehen sein, dass (- sei es bei dem Kupplungselement oder bei dem Schraubeinsatz -) die die Teilgewindegänge ausbildenden Vertiefungen so ausgebildet sind, dass sie keinen gemeinsamen Gewindegang ausbilden. D.h., anschaulich oder vereinfacht ausgedrückt, alle Vertiefungen bzw. Teilgewindegänge liegen nicht auf einer (gedacht durchgängigen) gemeinsamen Schraubenlinie.

Ferner kann es (- sei es bei dem Kupplungselement oder bei dem Schraubeinsatz -) auch zweckmäßig sein, dass zwischen den Teilgewindegängen eines Gewindesegments Lücken ausgebildet sind.

Anschaulich bzw. vereinfacht ausgedrückt, Teilgewindegänge eines Gewindesegments grenzen in axialer Richtung nicht unmittelbar aneinander, sondern zwischen jeweils zwei Teilgewindegänge sind jeweils breitere Vertiefungen als die Teilgewindegänge selbst.

Dadurch können - bei Kopplung des Kupplungselements bzw. des Schraubeinsatzes mit einem entsprechenden Gegenstück - das Außengewinde beim Kupplungselement bzw. das Innengewinde bei dem Schraubeinsatz mit dem entsprechenden Innengewinde bzw. dem entsprechenden Außengewinde des Gegenstücks leichter ineinander finden.

Insbesondere herstellungstechnisch günstig ist es, wenn (-sei es bei dem Kupplungselement oder bei dem Schraubeinsatz-) mindestens zwei oder mehrere, insbesondere alle, Gewindesegmente gleich ausgebildet sind.

Bevorzugt kann auch vorgesehen sein, dass auf der äußeren Oberfläche des Zapfens bzw. auf der inneren Oberfläche der Ausnehmung drei, insbesondere gleichmäßig in radialer Umfangsrichtung verteilte, Gewindesegmente angeordnet sind. Auch vier oder noch mehr, insbesondere gleichmäßig in radialer Umfangsrichtung verteilte, Gewindesegmente können vorgesehen sein.

Vorzugsweise können diese Gewindesegmente auch gleichwinklig angeordnet sein.

Entsprechendes kann dann so auch für die Unterbrechungen am Zapfen bzw. auf der inneren Oberfläche der Ausnehmung gelten.

Darüber hinaus kann auch vorgesehen sein, dass in dem den ersten Verbindungs-/Kopplungsbereich ausbildenden Zapfen des Kupplungselements eine ein Innengewinde aufweisenden Ausnehmung vorgesehen ist.

Diese kann beispielsweise dazu vorgesehen sein, das Kupplungselements - anstelle über die Gewindesegmente auf der Zapfenoberfläche - mit einem anderen, alternativen Gegenstück, beispielsweise eine Gewindestange, wie sie beispielsweise der 3D Taster aus der WO 02/103282 A1 vorsieht, zu koppeln. Auf die "originäre" Kupplungsmöglichkeit des Kupplungselements über die Gewindesegmente auf der Zapfenoberfläche muss so nicht verzichtet werden, sie wird - vereinfacht ausgedrückt - um eine weitere ergänzt. Das Kupplungselement ist so vielfältig einsetzbar. D.h., anschaulich gesagt, Schnittstellen offen bzw. multi-kompatibel mit 3D-Tastern.

Ferner kann am Kupplungselement - dort andererends - ein einen zweiten Verbindungs-/Kopplungsbereich ausbildender weiterer Zapfen vorgesehen sein. Auch dieser weitere Zapfen kann mit einer weiteren Ausnehmung ausgebildet sein. Diese weitere Ausnehmung kann beispielsweise dazu dienen, eine Tastspitze/einen Tasteinsatz aufzunehmen. Beispielsweise kann dieser/diese darin verschraubt und/oder verklebt sein.

So kann beispielsweise vorgesehen sein, eine Hülse eines Tasteinsatzes in dieser weiteren Ausnehmung zu verkleben.

Auch ist es zweckmäßig, eine sich radial erstreckende Anlagefläche für eine axiale Plananlage an bzw. bei dem Kupplungselement vorzusehen (kurz auch nur Plananlage). Diese kann insbesondere in Richtung des Zapfenendes des den ersten Verbindungs-/Kopplungsbereich ausbildende Zapfens ausgerichtet sein - und insbesondere auch dazu vorgesehen sein, auf einer entsprechenden Fläche an einem Koppelarm/einer Messwelle aufzuliegen.

Auch kann das Kupplungselement einen im Wesentlichen zylindrischen Teilabschnitt aufweisen, auf dessen äußeren Oberfläche ein in radialer Umfangsrichtung zumindest teilweise, insbesondere vollständig, umlaufender, sich radial nach außen gewölbter Wulst für eine radiale Zentrierung ausgebildet sein (kurz auch nur Zentrierung, beispielsweise für eine Zentrierung des Kupplungselements in einer Ausnehmung im Koppelarm/Messwelle, in welcher Ausnehmung das Kupplungselement ausgenommen ist/wird).

Dieser Wulst kann insbesondere nach dem den ersten Verbindungs-/Kopplungsbereich ausbildenden Zapfen auf der äußeren Oberfläche des Zapfens ausgebildet sein, insbesondere zwischen Plananlage und dem den ersten Verbindungs-/Kopplungsbereich ausbildenden Zapfen.

Weiterhin kann auch vorgesehen sein, dass das Kupplungselement einen Teilabschnitt vorsieht, dessen äußerer Umfang im Querschnitt unrund ist. Dieses Unrund kann insbesondere durch radial weiter innen und radial weiter außenliegende Bereiche gebildet werden.

Dabei können als "unrund" geometrische Formen und Querschnitte angesehen werden, die vom Kreis abweichen.

Dementsprechend ist es auch zweckmäßig, wenn eine innere Oberfläche einer Ausnehmung im Koppelarm/Messwelle, in welcher das Kupplungselement aufgenommen werden kann bzw. ist/wird, komplementär zum Unrund ausgebildet ist, insbesondere auch radial weiter innen und radial weiter außenliegende Bereiche aufweist.

Somit kann dann, soll das Kupplungselement im Koppelarm/Messwelle aufgenommen werden, dieses in dessen Ausnehmung eingeschoben und dann - gegenüber der Koppelarm/Messwelle - verdreht werden. Kommen dabei dann die radial weiter außenliegenden Bereiche des Kupplungselements bzw. am/des Teilabschnitts des Kupplungselements mit den radial weiter innenliegenden Bereichen des Koppelarms/Messwelle bzw. in der Ausnehmung des Koppelarms/Messwelle bzw. an der inneren Oberfläche der Ausnehmung des Koppelarms/Messwelle zur Anlage, so verspannen sich das Kupplungselement und der Kopplungsarm/Messwelle (d.h., das Spiel wird aus der Paarung genommen) - und können dadurch auch zueinander zentriert werden.

Vorteilhaft kann es auch sein, wenn der Schraubeinsatz andererends einen einen zweiten Verbindungs-/Kopplungsbereich ausbildenden Zapfen aufweist, auf dessen äußeren Oberfläche ein Außengewinde ausgebildet ist, oder wenn der Schraubeneinsatz andererends eine den zweiten Verbindungs-/Kopplungsbereich 120 ausbildende Bohrung mit eingesetzter (Innensechskant-)Schraube aufweist.

Mittels dieses Außengewindes bzw. dieser Schraube bzw. dessen (Außen-)Gewinde kann beispielsweise der Schraubeinsatz mit einem bei dem Koppelarm vorgesehenen Innengewinde mit diesem verschraubt werden.

Auch kann bei dem Schraubeinsatz ein durchmesserverjüngter, im Wesentlichen zylindrischer Zwischenbereich zwischen dem ersten und dem zweiten Verbindungs-/Kopplungsbereich, vorgesehen sein. Durch diesen kann der Schraubeinsatz gewisse Flexibilität aufweisen, - um gegebenenfalls auftretende Toleranzen ausgleichen zu können.

Auch eine axiale Plananlage und/oder eine Zentrierung kann bei dem Schraubeinsatz vorgesehen sein. D.h., anders ausgedrückt, es kann vorgesehen sein, dass der Schraubeinsatz eine sich radial erstreckende Anlagefläche für eine axiale Plananlage bzw. einen im Wesentlichen zylindrischen Teilabschnitt für eine radiale Zentrierung (beispielsweise für eine Zentrierung des Schraubeinsatzes in einer Ausnehmung im Koppelarm/Messwelle, in welcher Ausnehmung der Schraubeinsatz) aufweist - beides insbesondere zur Anlage und/oder Zentrierung gegenüber der Messwelle/dem Koppelarm.

Weiterbildend kann auch eine radial federnde Struktur auf einer äußeren Oberfläche des Schraubeinsatzes vorgesehen sein, insbesondere im Bereich des ersten Verbindungs-/Kopplungsbereichs.

Zweckmäßig, weil fertigungstechnisch einfach, kann hier weiter sein, wenn die axial federnde Struktur mittels Federklemmelemente ausgebildet ist ("Clip").

Dementsprechend kann es dann auch zweckmäßig sein, wenn an einer inneren Oberfläche einer Ausnehmung im Koppelarm/Messwelle, in welcher der Schraubeinsatz aufgenommen werden kann bzw. ist/wird, eine (Einrast-)Struktur ausgebildet ist, in welcher diese radial federnde Struktur am/des Schraubeinsatzes einrastbar ist.

Zweckmäßig, weil fertigungstechnisch einfach, kann hier weiter sein, wenn die (Einrast-)Struktur durch eine radial umlaufende Nut an der inneren Oberfläche der Ausnehmung im Koppelarm/Messwelle ausgebildet ist.

Mittels dieser einfachen Strukturelemente - von axial federnder Struktur des Schraubeinsatzes und/oder (Einrast-)Struktur des Koppelarms/Messwelle - kann so der Schraubeinsatz auf einfache Art und Weise sicher im Koppelarm/Messwelle aufgenommen und gehalten werden.

Gegebenenfalls ist es auch zweckmäßig hier den Schraubeinsatz mit einer Verdrehsicherung gegenüber dem Koppelarm/Messwelle) auszubilden.

Die erfindungsgemäße Kupplungsanordnung sieht das Kupplungselement sowie den Schraubeinsatz vor. Beide können insbesondere mit den beschriebenen Ausgestaltungen ausgebildet sein.

Besondern zweckmäßig ist es hier, wenn die Gewindesegmente des Kupplungselements und die Gewindesegmente des Schraubeinsatzes als korrespondierende, verschraubbare Innen-/Außengewinde ausgebildet sind (s. oben zum Drehkuppeln)).

Auch die jeweiligen Unterbrechungen beim Kupplungselement und Schraubeinsatz können aneinander angepasst sein (s. oben zum Drehkuppeln).

Die Verbindung von Kupplungselement und Schraubeinsatz erfolgt dann insbesondere durch - schnelles - Drehkuppeln (s. oben), d.h., durch axiales Einstecken des Kupplungselements in den Schraubeinsatz und dann - gegenseitiges - (Ver-) Drehen.

Besonderes zweckmäßig ist es so auch, das Kupplungselement und/oder den Schraubeinsatz bzw. die Kupplungsanordnung zur Aufnahme einer Tastspitze in einem Tastmessgerät, insbesondere einem 3D-Taster, zu verwenden, kann so die Tastspitze einfach und schnell (im Tastmessgerät) montiert oder (bei diesem) ausgetauscht werden.

Ein erfindungsgemäßes Tastmessgerät sieht (zumindest) den Schraubeinsatz, insbesondere nach beschriebenen Ausgestaltungen, und einen Koppelarm/Messwelle vor, wobei der Schraubeinsatz und der Koppelarm/Messwelle miteinander verbunden sind, insbesondere miteinander verschraubt oder einstückig ausgebildet sind.

Insbesondere kann diese Verbindung von Schraubeinsatz und Koppelarm/Messwelle dadurch realisiert sein, dass Schraubeinsatz andererends den den zweiten Verbindungs-/Kopplungsbereich ausbildenden Zapfen aufweist, auf dessen äußeren Oberfläche das Außengewinde ausgebildet ist, und der Koppelarm das vorgesehene Innengewinde vorsieht. Das Außengewinde des Schraubeinsatzes und das Innengewinde des Koppelarm können dann miteinander verschraubt werden.

Ein weiteres erfindungsgemäßes Tastmessgerät kann auch das Kupplungselement, insbesondere nach beschriebenen Ausgestaltungen, einen Schraubeinsatz, insbesondere nach beschriebenen Ausgestaltungen, einem Tasteinsatz, insbesondere einen eine Tastkugel, einen Stift sowie eine Hülse aufweisenden Tasteinsatz, und einen Koppelarm/Messwelle aufweisen, wobei der Tasteinsatz mittels des Kupplungselements und des mit dem Kupplungselement verbundenen Schraubeinsatzes mit dem Koppelarm/Messwelle verbunden ist.

Weiter kann bei dem Tastmessgerät auch vorgesehen sein, dass die Gewindesegmente des Kupplungselements und die Gewindesegmente des Schraubeinsatzes als korrespondierende, verschraubbare Innen-/Außengewinde ausgebildet sind.

Auch die jeweiligen Unterbrechungen können aneinander angepasst sein, so dass sich das Kupplungselement und der Schraubeinsatz durch Drehkuppeln (s. oben) miteinander verbinden lassen.

Alternativ zu dem die Gewindesegmente aufweisenden erfindungsgemäßen Kupplungselement, kann auch ein (weiteres) solches vorgesehen sein, welches einerends einen einen ersten Verbindungs-/Kopplungsbereich ausbildenden Zapfen aufweist, auf dessen äußerer Oberfläche (anstelle der (mehreren durch die Unterbrechungen beabstandeten) Gewindesegmente) ein (durchgängiges bzw. nicht unterbrochenes) mehrgängiges Außengewinde ausgebildet ist.

Auch dieses alternative Kupplungselement kann mit beschriebenen Weiterbildungen des vorbeschriebenen, die Gewindesegmente ausweisenden, Kupplungselement weitergebildet sein, wie insbesondere die Ausnehmung mit Innengewinde bzw. die weitere Ausnehmung mit dem weiteren Innengewinde, die Plananlage bzw. die Zentrierung.

Vorteilhaft bei diesem das mehrgängige Gewinde aufweisende alternative Kupplungselement ist insbesondere, dass mit einem solchen, wird es über dieses mehrgängige Gewinde verschraubt, beispielsweise in einem Tastmessgerät, ein größerer axialer Vorschub/Hub bei gleichem Drehwinkel (im Vergleich zu eingängigen Gewinden) realisieren lässt, wodurch sich dieses Kupplungselement - schneller als ein herkömmliches eingängiges Gewinde aufweisende Teil - verschrauben lässt.

Erfolgt die Verbindung eines Tasteinsatzes dann über ein solches das mehrgängige Gewinde aufweisende alternative Kupplungselement bei/in einem Tastmessgerät, lässt sich so ein Tasteinsatz in schneller(-er) Zeit wechseln bzw. austauschen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Tasthebel mit einem Tasteinsatz, einem Kupplungselement, einem Schraubeinsatz und einem Koppelarm/Messwelle eines Tastmessgeräts gemäß einer Ausführung der Erfindung;
- FIG 2: (in Ansichten 2-1, 2-2 und 2-3) ein Kupplungselement eines Tasthebels eines Tastmessgeräts gemäß einer Ausführung der Erfindung
- FIG 3: (in Ansichten 3-1, 3-2 und 3-3) einen Schraubeinsatz eines Tasthebels eines Tastmessgeräts gemäß einer Ausführung der Erfindung;
- FIG 4: einen Abschnitt eines Tasthebels mit einem Tasteinsatz, einem Kupplungselement, einem Schraubeinsatz und einem Koppelarm/Messwelle eines Tastmessgeräts gemäß einer Ausführung der Erfindung;
- FIG 5: einen Tasthebel mit einem Tasteinsatz, einem Kupplungselement, einem Schraubeinsatz und einem Koppelarm/Messwelle eines Tastmessgeräts gemäß einer weiteren Ausführung der Erfindung;
- FIG 6: (in Ansichten 6-1, 6-2 und 6-3) einen Schraubeinsatz eines Tasthebels eines Tastmessgeräts gemäß einer weiteren Ausführung der Erfindung;
- FIG 7: einen Schnitt bei einem Tasthebel mit verspannbaren Kupplungselement eines Tastmessgeräts gemäß einer wieder weiteren Ausführung der Erfindung;
- FIG 8: einen Schnitt bei einem Tasthebel mit verspannbaren Kupplungselement eines Tastmessgeräts gemäß einer wieder weiteren Ausführung der Erfindung;
- FIG 9: einen Tasthebel mit einem Tasteinsatz, einem Kupplungselement, einem Schraubeinsatz und einem Koppelarm/Messwelle eines Tastmessgeräts gemäß einer noch weiteren Ausführung der Erfindung;
- FIG 10: eine Detailansicht von dem Kupplungselement, dem Schraubeinsatz und dem Koppelarm/Messwelle des Tastmessgeräts gemäß der noch weiteren Ausführung der Erfindung;
- FIG 11: einen Schnitt bei dem Tastmessgerät, wie in FIG 9 gekennzeichnet, gemäß der noch weiteren Ausführung der Erfindung.

### - 3D- Tasteinsatz/-spitze 8 mit Drehkupplung für einen 3D Taster 2 (Fig.en 1 bis 4)

Hier verwendete Begriffe, wie axial und radial, sind - soweit nicht anders explizit definiert - in Bezug auf die Messachse 82 des 3D Tasters 2 zu verstehen.

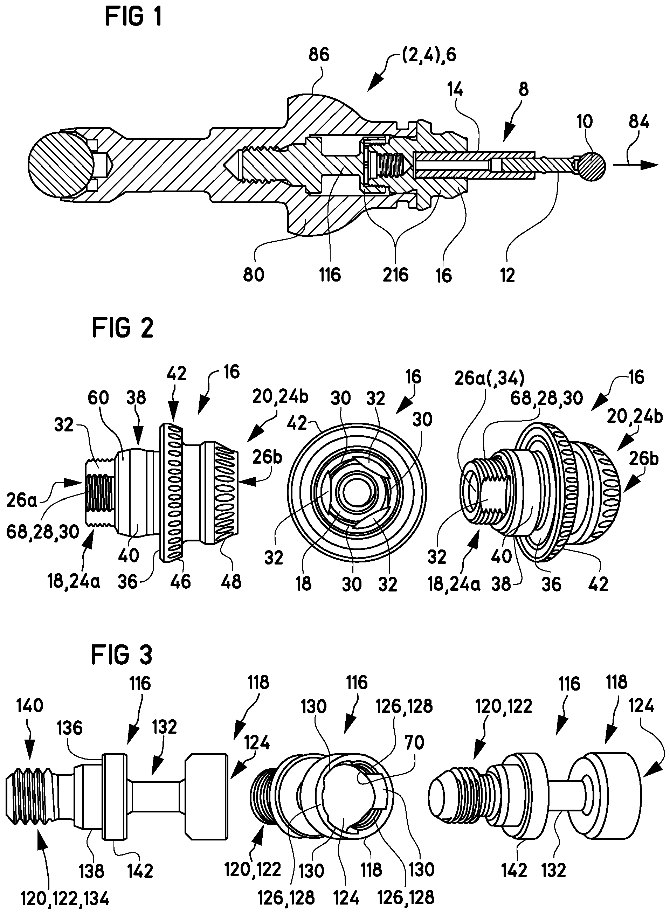

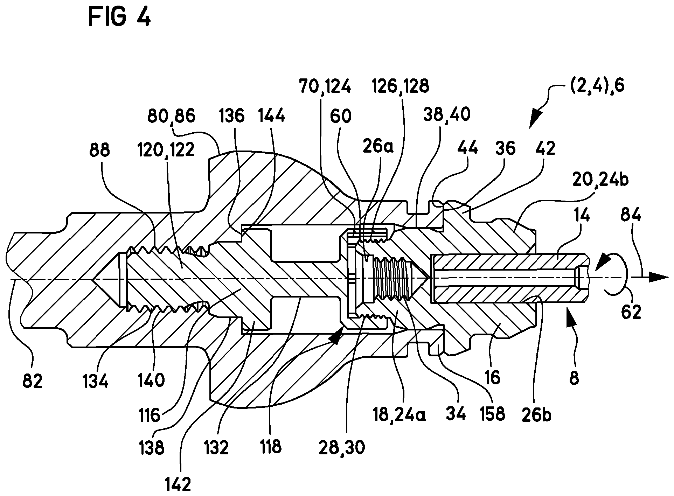

Der 3D Taster 2 umfasst ein Gehäuse 4 (in den Figuren nicht dargestellt), an dem ein Tasthebel 6 (vgl. Fig. 1, Fig. 4) in Richtung einer durch das Gehäuse 4 definierten Messachse 82 verschiebbar geführt ist.

Der Tasthebel 6 ist mittels eines Universalgelenks 86, hier in Form eines Kugelgelenks 86, darüber hinaus um einen auf der Messachse 82 liegenden Schwenkpunkt allseitig schwenkbar an dem Gehäuse 4 geführt und wird von einer Rückstellfeder (nicht in den Figuren dargestellt) federnd vorgespannt.

Der Tasthebel 6 hat, wie die Figuren 1 und 4 zeigen, einen aus dem Gehäuse herausragenden Tasteinsatz/Tastspitze 8, dessen freies, durch eine Tastkugel 10 gebildetes Tastende einen in der Ruhestellung des Tasthebels 6 auf der Messachse 82 liegenden Tast-Bezugspunkt definiert.

Der Tasthebel 6 umfasst, wie die Figuren 1 und 4 verdeutlichen, darüber hinaus einen Koppelarm 80, welcher - bezogen auf den Schwenkpunkt - entgegengesetzt zum Tasteinsatz 8 bzw. entgegengesetzt der Richtung 84 zur Tastspitze 8 in eine kreiszylindrische, zur Messachse 82 zentrische Führungsöffnung des Gehäuses 4 hineinragt (nicht in den Figuren dargestellt) .

Über eine ein Kupplungselement 16 (vgl. Fig. 2) und einen mit dem Kupplungselement 16 verbundenen Schraubeinsatz 116 (vgl. Fig. 3) aufweisende Kupplungsanordnung 216 ist, wie die Figuren 1 und 4 verdeutlichen, der Tasteinsatz 8, welcher neben der Tastkugel 10 einen (Stahl-)Stift 12, welcher die Tastkugel 10 mittels einer Schweißverbindung, aufnimmt, und eine (Keramik-)Hülse 14, welche ihrerseits mit dem Stift 12 verbunden ist, aufweist, mit dem Koppelarm 80 verschraubt.

Dazu sieht, wie näher im Zusammenhang mit Fig. 2 beschrieben wird, das (montierte) Kupplungselement 16 (dann) an ihrem in Richtung 84 zur Tastspitze 8 zeigendem Ende eine Ausnehmung 26b, in Form einer axialen, einseitig (endseitig) offenen Bohrung, vor, welche dazu dient, die Hülse 14 des Tasteinsatzes 8 aufzunehmen.

Wie Fig. 2 (in Ansichten 2-1, 2-2, 2 -3, Detailansicht des Kupplungselements 16) zeigt, weist das Kupplungselement 16 einerends einen einen ersten Verbindungs-/Kopplungsbereich 18 ausbildenden Zapfen 24a auf.

Dieser Zapfen 24a bildet auf einer äußeren Oberfläche 60 mehrere, in diesem Fall drei, sich in radialer Umfangsrichtung 62 nicht aneinander anschließende, in radialer Umfangsrichtung 62 gleichmäßig verteilt angeordnete und an sich gleiche Gewindesegmente 28 in Form von Außengewindeanteilen 30 aus, deren Teilgewindegänge 30 alle den gleichen, leicht degressiven Steigungsverlauf 68 bzw. kurz die gleiche, leicht degressive Steigung 68 aufweisen.

D.h., in radialer Umfangsrichtung 62 sind, wie Fig. 2 zeigt,-zwischen den drei Gewindesegmenten 28 (auf der äußeren Zapfenoberfläche 60 bei dem Kupplungselement 16) drei - so ebenfalls gleichmäßig in radialer Umfangsrichtung 62 (sich mit den Gewindesegmenten 28 abwechselnd) verteilt angeordnete, gewindefreie Bereiche bzw. gewindefreie Abschnitte, im Folgenden kurz und vereinfacht als Unterbrechungen 32 bezeichnet, hier in Form glatter Teilzylinderoberflächen/-mäntel, ausgebildet.

Dabei sind, wie Fig. 2 auch erkennen lässt, die drei Unterbrechungen 32 in radialer Umfangsrichtung 62 jeweils etwas länger als die drei Gewindesegmente 28 - und, wie Fig. 2 auch verdeutlicht, radial weiter innen liegend bzw. radial zurückgesetzt ausgebildet als die Gewindesegmente 28.

Weiterhin weist, wie Fig. 2 zeigt, der die Außengewindeanteile 30 tragende Zapfen 24a des Kupplungselements 16 eine axiale Ausnehmung 26a, in Form einer axialen, einseitig (endseitig) offenen Bohrung, auf, in welcher ein Innengewinde 34 vorgesehen ist.

Ferner ist, wie Fig. 2 verdeutlicht, am Kupplungselement 16 - dort andererends des die Gewindesegmente 28 bzw. die Außengewindeanteile 30 tragenden Zapfens 24a - ein einen zweiten Verbindungs-/Kopplungsbereich 20 ausbildender weiterer Zapfen 24b vorgesehen.

Auch dieser weitere Zapfen 24b sieht eine Ausnehmung 26b, in Form einer axialen, einseitig (endseitig) offenen Bohrung, vor, welche dazu dient (, wie Fig.en 1 und 4 zeigen), die Hülse 14 des Tasteinsatzes 8 aufzunehmen. D.h., die Hülse 14 des Tasteinsatzes 8 ist in dieser Ausnehmung 26b verklebt.

Ferner ist, wie Fig. 2 zeigt, an dem Kupplungselement 16 eine sich radial erstreckende, in Richtung des die Gewindesegmente 28 bzw. die Außengewindeanteile 30 tragenden Zapfens 24a gerichtete Anlagefläche 36 - an einem sich radial nach außen erstreckenden flanschartigen Vorsprung 42 - für eine axiale Plananlage an einer Gegenfläche 44 an dem Koppelarm 80 vorgesehen (kurz auch nur Plananlage).

Der flanschartige Vorsprung 42 sieht, wie Fig. 2 auch zeigt, auf seiner Außenumfangsfläche eine Riffelung 46 zur besseren Greifbarkeit vor. Eine entsprechende Riffelung 48 ist auch am Außenumfang des weiteren Zapfens 24b (dort auch zur besseren Greifbarkeit) ausgebildet.

Weiterhin sieht das Kupplungselement 16 - axial zwischen dem die Gewindesegmente 28 bzw. die Außengewindeanteile 30 tragenden Zapfen 24a und dem flanschartigen, die Plananlage vorsehenden Vorsprung 42 - einen im Wesentlichen zylindrischen Teilabschnitt 38 vor, auf dessen äußeren Oberfläche ein in radialer Umfangsrichtung umlaufender, sich radial nach außen gewölbter Wulst 40 für eine radiale Zentrierung des Kupplungselements 16 in dem Koppelarm 80 (vgl. Fig.en 1 und 4) ausgebildet ist (kurz auch nur Zentrierung).

Fig. 3 zeigt (in Ansichten 3-1, 3-2, 3 -3) im Detail den Schraubeinsatz 116.

Wie Fig. 3 zeigt, sieht der Schraubeinsatz 116 einerends einen ebenfalls einen ersten Verbindungs-/Kopplungsbereich 118 auf.

Dieser ersten Verbindungs-/Kopplungsbereich 118 weist eine axiale Ausnehmung 124, in Form einer axialen, einseitig (endseitig) offenen Bohrung, auf, auf deren inneren Oberfläche 70 mehrere, in diesem Fall drei, sich in radialer Umfangsrichtung 62 nicht aneinander anschließende, in radialer Umfangsrichtung 62 gleichmäßig verteilt angeordnete und an sich gleiche Gewindesegmente 126 in Form von Innengewindeanteilen 128 ausgebildet sind, deren Teilgewindegänge 128 alle den gleichen, leicht degressiven Steigungsverlauf 68 bzw. kurz die gleiche, leicht degressive Steigung 68 aufweisen.

D.h., in radialer Umfangsrichtung 62 sind, wie Fig. 3 zeigt,-zwischen den drei Gewindesegmenten 126 (auf der inneren Ausnehmungsoberfläche 70 bei dem Schraubeinsatz 116) drei - so ebenfalls gleichmäßig in radialer Umfangsrichtung 62 (sich mit den Gewindesegmenten 126 abwechselnd) verteilt angeordnete, gewindefreie Bereiche bzw. gewindefreie Abschnitte, im Folgenden kurz und vereinfacht wieder als Unterbrechungen 130 bezeichnet, hier in Form glatter Teilzylinderoberflächen/- mäntel, ausgebildet.

Dabei sind, wie Fig. 3 auch erkennen lässt, die drei Unterbrechungen 130 in radialer Umfangsrichtung 62 jeweils etwas länger als die drei Gewindesegmente 126 - und, wie Fig. 3 auch verdeutlicht, radial weiter außenliegend bzw. radial gegenüber den Gewindesegmenten 126 zurückgesetzt.

Kurz, der erste Verbindungs-/Kopplungsbereich 118 des Schraubeinsatzes 116 ist als komplementäres, kuppelbares Gegenstück/-element zum ersten Verbindungs-/Kopplungsbereich 18 des Kupplungselements 16 - oder - die die Gewindesegmente 126 tragenden Ausnehmung 124 des Schraubeinsatzes 116 ist als komplementäres, kuppelbares Gegenstück/-element zum die Gewindesegmente 28 tragenden Zapfen 24a des Kupplungselements 16 ausgebildet.

Über diese komplementären Elemente lassen sich, wie zu beschreiben sein wird, das Kupplungselement 16 und der Schraubeinsatz 116 auf einfache und schnelle Weise - durch Dreh-Kuppeln - miteinander verbinden.

Ferner ist, wie Fig. 3 verdeutlicht, am Schraubeinsatz 116 - dort andererends der die Gewindesegmente 126 bzw. die Innengewindeanteile 128 tragenden Ausnehmung 124 - ein einen zweiten Verbindungs-/Kopplungsbereich 120 ausbildender Zapfen 122 vorgesehen.

Auf der äußeren Oberfläche 140 des Zapfens 122 ist ein Außengewinde 134 vorgesehen, über welches der Schraubeinsatz 116 im Koppelarm 80 (dort in einem Innengewinde 88) verschraubbar ist (vgl. Fig.en 1 und 4).

Ferner ist, wie Fig. 3 zeigt (und Fig.4 verdeutlicht), - ähnlich dem Kupplungselement 16 - an dem Schraubeinsatz 116 eine sich radial erstreckende, in Richtung des das Außengewinde 134 tragenden Zapfens 122 gerichtete Anlagefläche 136 - an einem sich radial nach außen erstreckenden flanschartigen Vorsprung 142 - für eine axiale Anlage an einer Gegenfläche 144 an dem Koppelarm 80 vorgesehen.

Weiterhin sieht der Schraubeinsatz 116 - axial zwischen dem das Außengewinde 134 tragenden Zapfen 122 und dem flanschartigen, die Anlage vorsehenden Vorsprung 142 - einen im Wesentlichen zylindrischen Teilabschnitt 138 für eine radiale Zentrierung in dem Koppelarm 80 vor.

Wie Fig. 3 auch zeigt, weist der Schraubeinsatz 116 weiter auch einen durchmesserverjüngten, im wesentlichen zylindrischer Zwischenbereich 132 - axial zwischen dem ersten und dem zweiten Verbindungs-/Kopplungsbereich 118, 120 bzw. axial zwischen dem flanschartigen Vorsprung 142 und dem ersten Verbindungs-/Kopplungsbereich 118 des Schraubeinsatzes 116 - auf, wodurch der Schraubeinsatz 116 gewisse Flexibilität aufweisen kann, um gegebenenfalls auftretende Toleranzen ausgleichen zu können.

Die Montage des Tasteinsatzes 8 kann bei dem im Koppelarm 80 verschraubten Schraubeinsatz 116 erfolgen.

Dazu ist der Schraubeinsatz 116 über das auf der äußeren Zapfenoberfläche 140 vorgesehene Außengewinde 134 im Koppelarm 80 (dort in einem Innengewinde 88) verschraubbar (vgl. Fig.en 1 und 4).

Zur Fixierung des Tasteinsatzes 8, welcher über seine Hülse 14 mit dem Kupplungselement 16 verbunden ist, mit/an dem Koppelarm 80 (vgl. Fig.en 1 und 4), wird dann der die Gewindesegmente 28 mit den Außengewindeanteilen 30 aufweisende Zapfen 24a des Kupplungselements 16 in die die Gewindesegmente 126 mit den Innengewindeanteilen 128 aufweisende Ausnehmung 124 des Schraubeinsatzes 116 axial eingeführt/-geschoben (und zwar solange bis die axiale Plananlagefläche 36 zur Anlage an die Gegenfläche 44 des Koppelarms 80 kommt), wobei die Gewindesegmente 28 des Kupplungselements 16 in die Unterbrechungen 130 des Schraubeinsatzes 116 (bzw. vice versa (32/126) eintauchen, - und dann durch "Gegeneinanderverdrehen" (hier greifen dann die Außen- und Innengewindeanteile 30, 128 der Gewindesegmente 28, 126 ineinander) verspannt - und so gekuppelt bzw. gehalten/fixiert (Dreh-Kuppeln).

Diese - bei der Montage des Tasteinsatzes 8 in den 3D Taster 2 durchzuführende - Steck-Dreh-Abfolge bzw. das Dreh-Kuppeln von Kupplungselement 16 und Schraubeinsatz 116 erfordert keine langwierige Verschraubung, wie sie bei dem 3D Taster aus der WO 02/103282 A1 - mit dortigem Zentrierelement und Gewindestange - notwendig ist - und ermöglicht so einen einfachen und schnellen Austausch bzw. eine schnelle und einfache Montage des Tasteinsatzes 8 im 3D Taster 2.

### - 3D- Tasteinsatz/-spitze 8 mit Drehkupplung für einen 3D Taster 2 mit Schraubeinsatz 116 als "Clip" (Fig.en 5 bis 6)

Auch hier verwendete Begriffe, wie axial und radial, sind - soweit nicht anders explizit definiert - in Bezug auf die Messachse 82 des 3D Tasters 2 zu verstehen.

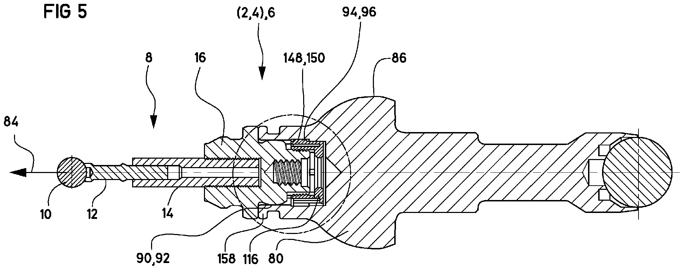

Fig. 5 zeigt einen Tasthebel 6 eines 3D Tasters 2 mit einem Tasteinsatz 8, einem Kupplungselement 16, einem Koppelarm/Messwelle 80 und einem - alternativen - Schraubeinsatz 116.

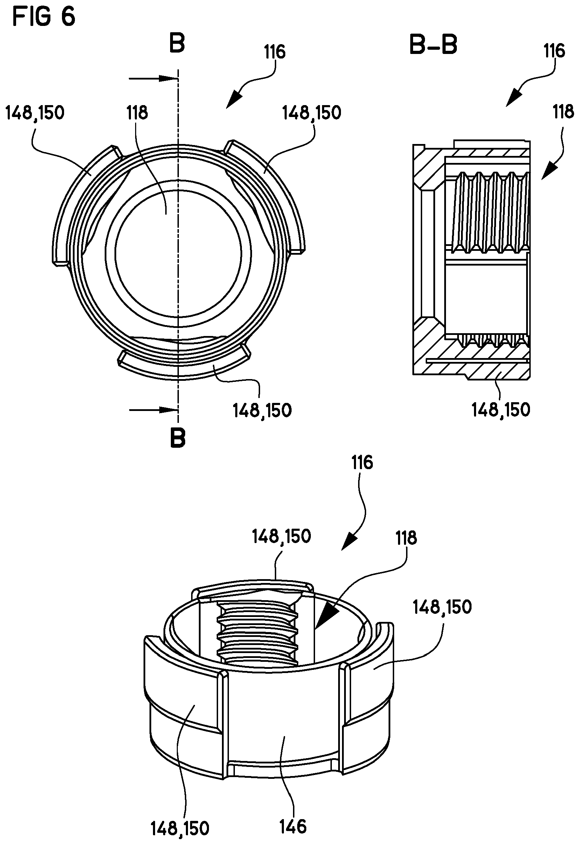

Fig. 6 (in Ansichten 6-1, 6-2 und 6-3) zeigt diesen alternativen Schraubeinsatz 116 im Detail.

Der Tasteinsatz 8 und das Kupplungselement 16 sind identisch zu vorbeschriebenen Ausführung (nach den Figuren 1 bis 4) ausgebildet; der Koppelarm/Messwelle 80 sowie der Schraubeinsatz 116 entsprechen weitestgehend auch der vorbeschriebenen Ausführung, insbesondere soweit es die Dreh-Kupplung von Kupplungselement 16 und Schraubeinsatz 116 betrifft.

Unterschiede - zum vorbeschriebenen Tasthebel 6 (nach den Figuren 1 bis 4) - weist die nachbeschriebene Ausführung des Tasthebels (nach den Figuren 5 bis 6) "nur" hinsichtlich der Halterung des Schraubeinsatzes 16 im Koppelarm/Messwelle 80.

Aufgrund der weitest gehenden Übereinstimmung der beiden Ausführungen wird der Einfachheit halber hier (nachfolgend) auf die Beschreibung identischer Elemente in beiden Ausführungen verzichtet - und es wird diesbezüglich auf die Ausführungen zur vorbeschriebenen Ausführung verwiesen werden. Insbesondere gleiche Bauteile/Komponenten und Funktionen weisen in den Zeichnungen/Figuren gleiche Bezugszeichen auf.

Wie die Figuren 5 und 6 zeigen, sieht der alternative Schraubeinsatz 116 eine radial federnde Struktur 148 auf der äußeren Oberfläche 146 des Schraubeinsatzes 116 vor, welche dort im Bereich des ersten Verbindungs-/Kopplungsbereichs 118 ausgebildet ist.

Diese axial federnde Struktur 148 ist dabei, wie insbesondere die Fig. 6 verdeutlicht, mittels - hier dreier - Federklemmelemente 150 ausgebildet ("Clip").

Wie weiter Fig. 5 dann zeigt, ist an der inneren Oberfläche 92 der Ausnehmung 90 im Koppelarm/Messwelle 80, in welcher der Schraubeinsatz 116 aufgenommen ist, eine (Einrast-)Struktur 94 - hier in Form einer radial umlaufenden Nut 96 an der inneren Oberfläche 92 der Ausnehmung 90 im Koppelarm/Messwelle 80 - ausgebildet, in welcher Nut 96 diese radial federnde Struktur 148 bzw. die Federklemmelemente 150 einrasten kann.

Mittels dieser einfachen Strukturelemente - von radial federnder Struktur 148 bzw. Federklemmelemente 150 des Schraubeinsatzes 116 und (Einrast-)Struktur 94 bzw. Nut 96 des Koppelarms/Messwelle 80 - kann so der Schraubeinsatz 116 auf einfache Art und Weise sicher im Koppelarm/Messwelle 80 aufgenommen und gehalten werden.

### - 3D- Tasteinsatz/-spitze 8 mit im Koppelarm/Messwelle 80 verspannten Kupplungselementen 16 (Fig.en 7 und 8)

Auch hier verwendete Begriffe, wie axial und radial, sind - soweit nicht anders explizit definiert - in Bezug auf die Messachse 82 des 3D Tasters 2 zu verstehen.

Fig.en 7 und 8 zeigen - in Schnittdarstellungen - Ausführungen von vorbeschriebenen (in den Koppelarm/Messwelle 80 aufgenommenen) Kupplungselementen 16, welche im Weiteren eine Verspannung mittels ihrer Oberflächen im Koppelarm/Messwelle 80 bzw. in der Ausnehmung 90 des Koppelarms/Messwelle 80 vorsehen (im Übrigen können bzw. sind diese Kupplungselemente 16, wie auch die sie aufnehmenden Koppelarme/Messwellen 80 nach vorbeschriebenen Ausführungen ausgebildet).

Dazu weisen, wie die Fig.en 7 und 8 verdeutlichen, solche Kupplungselemente 16 einen Teilabschnitt 38 auf, dessen äußerer Umfang im Querschnitt unrund ist. Dieses Unrund wird, wie die Fig.en 7 und 8 zeigen, (in beiden Fällen) durch radial weiter innen und radial weiter außenliegende Bereiche 50, 52 gebildet.

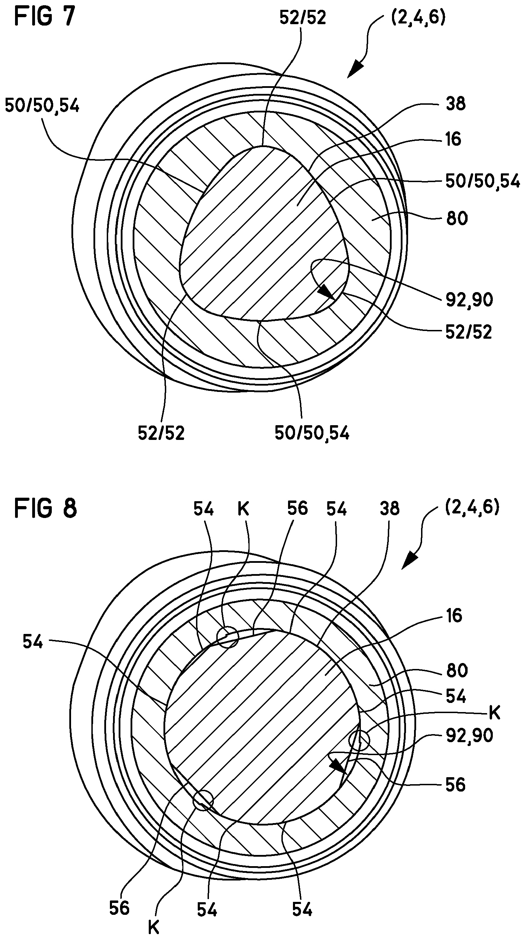

Dieser "unrunde" Teilbereich 38 ist dabei am jeweiligen Kopplungselement 16 (nach Fig. 7 und Fig. 8) zwischen der Plananlage 36 und dem den ersten Verbindungs-/Kopplungsbereich 18 ausbildenden Zapfen 24a angeordnet (vgl. beispielsweise Fig. 2) .

Fig. 7 zeigt ein Kopplungselement 16, bei welchem - zur Ausbildung der Unrundheit bzw. der radial weiter innen und radial weiter außenliegenden Bereiche 50, 52 - der äußere Umfang des Teilbereichs 38 im Querschnitt drei miteinander verbundene "flachere" Kreisbögen 54 aufweist, d.h., deren Krümmungsradien sind größer als der halbe Kreisdurchmesser.

Fig. 8 zeigt ein ähnliches Kopplungselement 16, bei welchem der äußere Umfang des Teilbereichs 38 im Querschnitt drei Kreisbögen 54 (eines gemeinsamen Kreises, d.h. mit gleichem Radius) über jeweils dazwischenliegende gerade Kreissehnen 56 verbindet.

Entsprechend diesen "unrunden" Teilbereichen 38 der Kopplungselementen 16 sind an den inneren Oberflächen 92 der Ausnehmungen 90 in den Koppelarmen/Messwellen 80 entsprechend komplementäre "unrunde" Strukturen ausgebildet. D.h., auch dort besitzen diese radial weiter innen und radial weiter außenliegende Bereiche 50, 52.

Fig. 7 zeigt einen Koppelarm/Messwelle 80, dessen Ausnehmung 90 an deren inneren Oberfläche 92 im Querschnitt - (zum Teilbereich 38 des Kopplungselements 16) etwas größere - drei miteinander verbundene "flachere" Kreisbögen 54 aufweist (, so dass sich - bei "konzentrischer" Anordnung/Ausrichtung von Koppelarm/Messwelle 80 und Kopplungselement 16 - zwischen Koppelarm/Messwelle 80 und Kopplungselement 16 ein (für die Verdrehung (Verspannung) notweniges) Spiel ausbildet/ausbilden kann).

Fig. 8 zeigt einen Koppelarm/Messwelle 80, dessen Ausnehmung 90 an deren inneren Oberfläche 92 im Querschnitt drei miteinander verbundene Kreisbögen 54 - dreier Radius gleicher Kreise mit verschobenen Mittelpunkten - aufweist (Anfänge der Kreisbögen 54 durch Kreise K markiert).

In beiden Fällen nach den Fig.en 7 und 8 bilden sich so - an der äußeren Oberfläche des Teilabschnitts 38 des jeweiligen Kopplungselements 16 wie auch an der inneren Oberfläche 92 der Ausnehmung 90 des jeweiligen Koppelarms/Messwelle 80 - radial weiter innen und radial weiter außenliegende Bereiche 50, 52 aus.

Somit kann dann, soll das Kupplungselement 16 im Koppelarm/Messwelle 80 aufgenommen werden, dieses in dessen Ausnehmung 90 eingeschoben und dann - gegenüber der Koppelarm/Messwelle 80 - verdreht werden. Kommen dabei dann die radial weiter außenliegenden Bereiche 50, 52 des Kupplungselements 16 bzw. am/des Teilabschnitts 38 des Kupplungselements 16 mit den radial weiter innenliegenden Bereichen 50, 52 des Koppelarms/Messwelle 80 bzw. in der Ausnehmung 90 des Koppelarms/Messwelle 80 bzw. an der inneren Oberfläche 92 der Ausnehmung 90 des Koppelarms/Messwelle 80 zur Anlage, so verspannen sich das Kupplungselement 16 und der Kopplungsarm/Messwelle 80.

### - 3D- Tasteinsatz/-spitze 8 mit Drehkupplung für einen 3D Taster 2 (Fig.en 9 bis 11)

Auch hier verwendete Begriffe, wie axial und radial, sind - soweit nicht anders explizit definiert - in Bezug auf die Messachse 82 des 3D Tasters 2 zu verstehen.

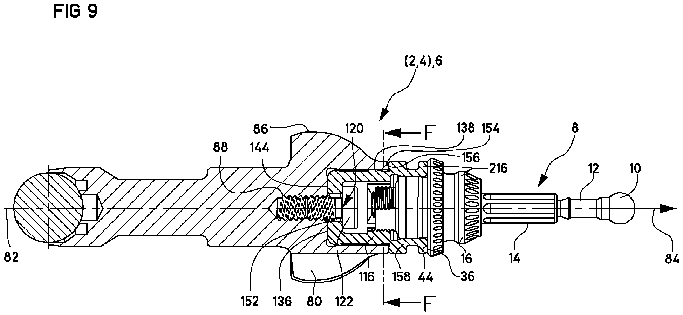

Fig. 9 zeigt einen Tasthebel 6 eines 3D Tasters 2 mit einem Tasteinsatz 8, einem Kupplungselement 16, einem - alternativen (geringfügig modifizierten) - Koppelarm/Messwelle 80 und einem - alternativen (geringfügig modifizierten) - Schraubeinsatz 116.

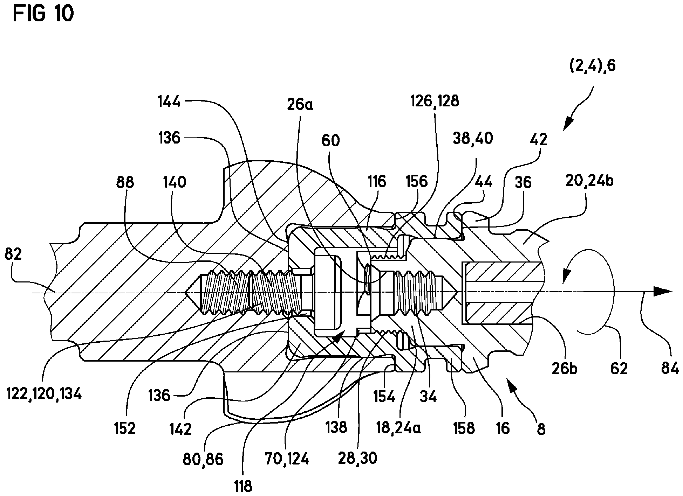

Fig. 10 zeigt einen Detailausschnitt dieses 3D Tasters 2 mit alternativem Schraubeinsatz 116.

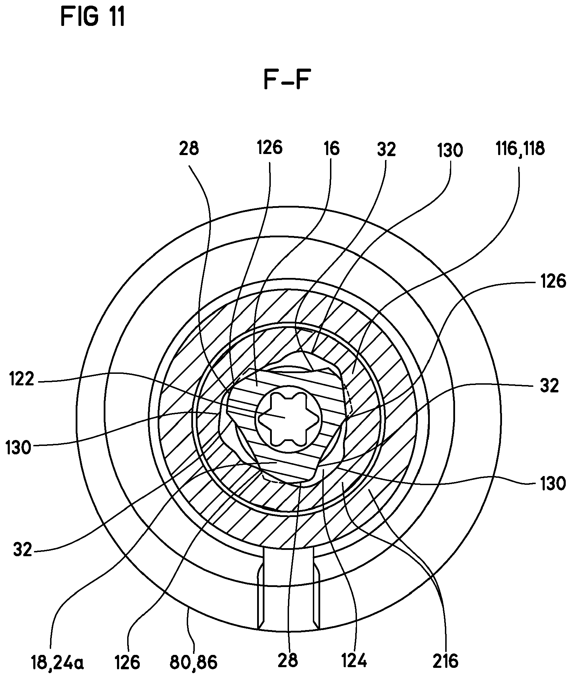

Fig. 11 zeigt einen Schnitt - entlang der in Fig. 9 mit F-F gekennzeichneten Schnittlinie bei diesem 3D Tasters 2 mit alternativem Schraubeinsatz 116.

Der Tasteinsatz 8 und das Kupplungselement 16 sind identisch zu vorbeschriebenen Ausführung (nach den Figuren 1 bis 4) ausgebildet; der Koppelarm/Messwelle 80 sowie der Schraubeinsatz 116 entsprechen weitestgehend auch der vorbeschriebenen Ausführung, insbesondere soweit es die Dreh-Kupplung von Kupplungselement 16 und Schraubeinsatz 116 betrifft (Gewindesegmente 28, 126 (vgl. Fig.en 2 und 3)).

Unterschiede - zum vorbeschriebenen Tasthebel 6 (nach den Figuren 1 bis 4) - weist die nachbeschriebene Ausführung des Tasthebels 6 (nach den Figuren 9 bis 11) "nur" hinsichtlich der Halterung des Schraubeinsatzes 16 im Koppelarm/Messwelle 80 sowie der axialen Plananlage der axialen Plananlagenfläche 36 des Kupplungselements 16 auf.

Aufgrund der weitest gehenden Übereinstimmung der beiden Ausführungen wird der Einfachheit halber hier (nachfolgend) auf die Beschreibung identischer Elemente in beiden Ausführungen verzichtet - und es wird diesbezüglich auf die Ausführungen zur vorbeschriebenen Ausführung (nach den Fig.en 1 bis 4) verwiesen werden. Insbesondere gleiche Bauteile/Komponenten und Funktionen weisen in den Zeichnungen/Figuren gleiche Bezugszeichen auf.

Wie insbesondere die Figuren 9 und 10 zeigen, sieht der alternative Schraubeinsatz 116 am Schraubeinsatz 116 - dort andererends der die Gewindesegmente 126 bzw. die Innengewindeanteile 128 tragenden Ausnehmung 124 - eine den zweiten Verbindungs-/Kopplungsbereich 120 ausbildende Bohrung 152 mit eingesetzter (Innensechskant-)Schraube 122 vor.

Mittels dieser (Innensechskant-)Schraube 122 - und ihren Außengewinde 134 - ist der Schraubeinsatz 116 im Koppelarm 80 (dort in dem Innengewinde 88) verschraubt (vgl. Fig.en 9 und 10) .

Ferner bildet, wie auch die Fig.en 9 und 10 zeigen, das die Bohrung 152 und die Schraube 122 aufweisende andersseitige Ende des Schraubeinsatz 116 eine sich radial erstreckende, Anlagefläche 136 für die axiale Anlage an der Gegenfläche 144 an dem Koppelarm 80.

Weiterhin sieht der Schraubeinsatz 116 hier einen im Wesentlichen zylindrischen Teilabschnitt 138 für eine radiale Zentrierung in dem Koppelarm 80 vor.

Wie weiter die Fig.en 9 und 10 verdeutlichen, stützt sich hier die sich radial erstreckende, in Richtung des die Gewindesegmente 28 bzw. die Außengewindeanteile 30 tragenden Zapfens 24a gerichtete Anlagefläche 36 des sich radial nach au-ßen erstreckenden flanschartigen Vorsprungs 42 des Kupplungselements 16 an einer Gegenfläche 44 an dem Schraubeinsatz 116 ab (Plananlage - s. oben) (vgl. nach der Ausführung nach den Fig.en 1 bis 4 erfolgte diese Plananlage 36/44 zwischen Kupplungselement 16 und Koppelarm 80).

Eine (weitere) Plananlage zwischen Schraubeinsatz 116 und Koppelarm 80 erfolgt dann, wie die Fig.en 9 und 10 zeigen, über eine Plananlagefläche 156 am Schraubeinsatz 116 und einer Gegenfläche 154 am Koppelarm 80.

Kurz und anschaulich ausgedrückt, wo nach der Ausführung des Tasthebels 6 nach den Fig. 1 bis 4 die Plananlage mittels einer flanschartigen - einstückig an dem Koppelarm 80 vorgesehen - Struktur 158 zwischen Kupplungselement 16 und Koppelarm 80 erfolgt (vgl. Plananlage 44/36 nach Fig. 4), so ist bei der Ausführung des Tasthebels 6 nach den Fig.en 9 bis 11 diese flanschartige Struktur 158 einstückig am Schraubeinsatz 116 ausgebildet, wodurch sich einerseits eine erste Plananlage 44/36 zwischen Kupplungselement 16 und Schraubeinsatz 116 und andererseits eine zweite Plananlage 154/156 zwischen Schraubeinsatz 116 und Koppelarm 80 ausbildet.

Auch hier kann so mittels dieser einfachen Strukturelemente am Schraubeinsatz 116 der Schraubeinsatz 116 auf einfache Art und Weise sicher im Koppelarm/Messwelle 80 aufgenommen und gehalten werden.

Ungeachtet vorbeschriebener Ausführungsbeispiele, insbesondere den nach den Fig.en 1 bis 4, Fig.en 7 bis 8 und Fig.en 9 bis 11, können Elemente eines Ausführungsbeispiels mit Elementen eines anderen Ausführungsbeispiels kombiniert werden. Beispielsweise kann der Schraubeinsatz 116 mit separater Schraube 122 (nach der Ausführung nach den Fig.en 9 bis 11) und Anlageflächen 44/36 (nach der Ausführung nach Fig. 4) miteinander bei einem weiteren Tasthebel 6 eines 3D Tasters 2 kombiniert werden.

Bei dieser kombinierten Ausführungsform kann der Schraubeinsatz 116 auch etwas wackeln, wenn die Schraube 122 nicht ganz angezogen wird, so dass die Zentrierung des Koppelarmes 16 nicht beeinflusst wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden.

### Bezugszeichenliste:

- 2: Tastmessgerät, 3D-Taster
- 4: Gehäuse
- 6: Tasthebel, Tastarm
- 8: Tasteinsatz, Tastspitze
- 10: Tastkugel (Tastbezugspunkt) (verschweißt mit Stahlstift 12)

- 12: (Stahl-)Stift (verklebt in Keramikhülse 14)
- 14: (Keramik-)Hülse (verschraubt und verklebt in Kupplungselement 16)
- 16: Kupplungselement (für Schnellkupplung Tasteinsatz 8Koppelarm/Messwelle 80, gekuppelt mit Schraubeinsatz 36)
- 18: erster Verbindungs-/Kopplungsbereich, erster Schraubbereich (Kopplung mit Schraubeinsatz 116)
- 20: zweiter Verbindungs-/Kopplungsbereich, zweiter Schraubbereich (Verbindung mit Tasteinsatz/Tastspitze 8 bzw. Keramikhülse 14)

- 24a: (Gewinde-)Zapfen (einerends) (darauf Gewindesegmente 28)
- 24b: weiterer (Gewinde-)Zapfen (andererends) (mit Ausnehmung 26b für Hülse 14)
- 26a: weitere Ausnehmung (beim ersten Verbindungsbereich 18 für Innengewinde 34 für Verschraubung mit bisheriger Gewindestange)
- 26b: Ausnehmung (beim zweiten Verbindungsbereich 20 für Hülse 14)
- 28: Gewindesegment ((auf dem Zapfen 24a) für (Schnell)Kopplung mit Schraubeinsatz 36)
- 30: Vertiefung, Teilgewindegang, Außengewindeanteil (beim Gewindesegment 28)

- 32: Unterbrechung, Ausnehmung (zwischen Gewindesegmente 28)
- 34: Innengewinde (in Ausnehmung 26a im Zapfen 24a für Verschraubung mit bisheriger Gewindestange)
- 36: Anlagefläche zur axialen Plananlage (axiale Plananlagenfläche)
- 38: im Wesentlichen zylindrischer Teilabschnitt (für eine radiale Zentrierung)
- 40: Wulst

- 42: flanschartiger Vorsprung (mit Plananlage)
- 44: Gegenfläche (am Koppelarm 80/am Schraubeinsatz 116 für Plananlagefläche 36)
- 46: Riffelung
- 48: Riffelung
- 50: radial weiter innen liegender Bereich (der unrunden Struktur)

- 52: radial weiter außenliegender Bereich (der unrunden Struktur)
- 54: Kreisbogen
- 56: Kreissehne

- 60: äußere Oberfläche (des Zapfens 24a)
- 62: radiale Umfangsrichtung
- 68: Steigungsverlauf
- 70: innere Oberfläche (in Ausnehmung 124)

- 80: Koppelarm, Messwelle
- 82: Messachse
- 84: Richtung Tastspitze
- 86: Universal-/Kugelgelenk
- 88: Innengewinde
- 90: Ausnehmung (im Koppelarm 80 für Kupplungselement 16 und Schraubeinsatz 116)
- 92: innere Oberfläche (in Ausnehmung 90 (mit unrunder Struktur))
- 94: (Einrast-)Struktur
- 96: radial umlaufende Nut

- 116: Schraubeinsatz (für Schnellkupplung Tasteinsatz 8 - Koppelarm/Messwelle 80, gekuppelt mit Kupplungselement 16)
- 118: erster Verbindungs-/Kopplungsbereich, erster Schraubbereich (Kopplung mit Kupplungselement 16)
- 120: zweiter Verbindungs-/Kopplungsbereich, zweiter Schraubbereich (Verbindung mit Koppelarm/Messwelle 80) Außengewinde (für Verschraubung mit Koppelarm/Messwelle 80)

- 122: (Gewinde-)Zapfen bzw. Schraube (mit Außengewinde 134 für Verschraubung mit/im Koppelarm/Messwelle 80)
- 124: Ausnehmung (beim/im ersten Verbindungsbereich 118 für Gewindesegmente 126)
- 126: Gewindesegment (für (Schnell-)Kopplung mit Kupplungselement 16)
- 128: Vertiefung, Teilgewindegang, Innengewindeanteil (beim Gewindesegment 126)
- 130: Unterbrechung, Ausnehmung (zwischen Gewindesegmente 126)

- 132: durchmesserverjüngter Zwischenbereich (zwischen dem ersten und dem zweiten Verbindungs-/Kopplungsbereich 118, 120 (Nachgiebigkeit))
- 134: Außengewinde
- 136: Anlagefläche zur axialen Anlage (axiale Anlagenfläche)
- 138: im Wesentlichen zylindrischer Teilabschnitt (für eine radiale Zentrierung)
- 140: äußere Oberfläche (des Zapfens 122 bzw. der Schraube 122)

- 142: flanschartiger Vorsprung (mit Anlage), Anlage
- 144: Gegenfläche (am Koppelarm 80 für Anlagefläche 136)
- 146: äußere Oberfläche des Schraubeinsatzes 116 im Bereich des ersten Verbindungs-/Kopplungsbereichs
- 148: radial federnde Struktur
- 150: Federklemmelemente

- 152: Bohrung
- 154: Gegenfläche (am Koppelarm 80 für Plananlagefläche 156)
- 156: Anlagefläche (am Schraubeinsatz 116 zur axialen Plananlage (axiale Plananlagenfläche))

- 216: Kupplungsanordnung, Drehkupplung

- F-F: Schnitt

## Patentansprüche

1. Tastmessgerät (2), insbesondere 3D Taster (2), umfassend ein Kupplungselement (16) zur Aufnahme einer Tastspitze (8) in dem Tastmessgerät (2), insbesondere dem 3D-Taster (2), mit einem einerends einen ersten Verbindungs-/Kopplungsbereich (18) ausbildenden Zapfen (24a), wobei auf einer äußeren Oberfläche (60) des Zapfens (24a) mehrere sich in radialer Umfangsrichtung (62) nicht aneinander anschließende Gewindesegmente (28) ausgebildet sind.

2. Tastmessgerät (2) nach dem voranstehenden Anspruch 1,
**dadurch gekennzeichnet, dass**
die Gewindesegmente (28) jeweils durch eine oder mehrere jeweils einen Teil eines Gewindegangs ausbildende Vertiefungen (30) gebildet werden, wobei Steigungsverläufe (68) bei allen die Teilgewindegänge ausbildenden Vertiefungen (30) gleich sind, insbesondere dass die gleichen Steigungsverläufe (68) jeweils konstant sind oder dass die gleichen Steigungsverläufe sich ändern, insbesondere degressiv sind.

3. Tastmessgerät (2) nach einem der voranstehenden Ansprüche,
**dadurch gekennzeichnet, dass**
zwischen den Teilgewindegängen eines Gewindesegments (28) Lücken ausgebildet sind.

4. Tastmessgerät (2) nach einem der voranstehenden Ansprüche,
**dadurch gekennzeichnet, dass**
mindestens zwei oder mehrere, insbesondere alle, Gewindesegmente (28) gleich ausgebildet sind.

5. Tastmessgerät (2) nach einem der voranstehenden Ansprüche, **gekennzeichnet durch** drei, insbesondere gleichmäßig in radialer Umfangsrichtung (62) auf der äußeren Oberfläche (60) des Zapfens (24a) verteilt angeordnete, Gewindesegmente (28).

6. Tastmessgerät (2) nach einem der voranstehenden Ansprüche,
**dadurch gekennzeichnet, dass**
in dem den ersten Verbindungs-/Kopplungsbereich (18) ausbildenden Zapfen (24a) eine ein Innengewinde (34) aufweisenden Ausnehmung (26a) vorgesehen ist.

7. Tastmessgerät (2) nach einem der voranstehenden Ansprüche,
**gekennzeichnet durch**
einen andererends einen zweiten Verbindungs-/Kopplungsbereich (20) ausbildenden weiteren Zapfen (24b) mit einer weiteren Ausnehmung (26b) und/oder **durch** eine sich radial erstreckende Anlagefläche (36) für eine axiale Plananlage und/oder einen Teilabschnitt (38), dessen äußerer Umfang im Querschnitt unrund ist, insbesondere gebildet **durch** radial weiter innen und radial weiter außen liegende Bereiche (50, 52).

8. Tastmessgerät (2) nach einem der voranstehenden Ansprüche,
**gekennzeichnet durch**
einen im Wesentlichen zylindrischen Teilabschnitt (38), auf dessen äußeren Oberfläche ein in radialer Umfangsrichtung zumindest teilweise, insbesondere vollständig, umlaufender, sich radial nach außen gewölbter Wulst (40) für eine radiale

9. Tastmessgerät (2), insbesondere 3D Taster (2), umfassend ein Kupplungselement (16) für eine Tastspitze (8) des Tastmessgeräts (2), insbesondere des 3D-Tasters (2), mit einem einerends einen ersten Verbindungs-/Kopplungsbereich (18) ausbildenden Zapfen (24a), wobei auf einer äußeren Oberfläche (60) des Zapfens (24a) ein mehrgängiges Außengewinde ausgebildet ist.

10. Tastmessgerät (2), insbesondere 3D Taster (2), umfassend einen Schraubeinsatz (116) zur Verbindung mit einem Kupplungselement (16) zur Aufnahme einer Tastspitze (8) in dem Tastmessgerät (2), insbesondere dem 3D-Taster (2), mit einen einerends ausgebildeten ersten Verbindungs-/Kopplungsbereich (118), insbesondere zur Verbindung mit einem Kupplungselement (16) nach einem der voranstehenden Ansprüche 1-8, mit einer Ausnehmung (124), auf deren inneren Oberfläche (70) mehrere sich in radialer Umfangsrichtung (62) nicht aneinander anschließende Gewindesegmente (126) ausgebildet sind.

11. Tastmessgerät (2) nach dem voranstehenden Anspruch 10,
**dadurch gekennzeichnet, dass** die Gewindesegmente (126) jeweils durch eine oder mehrere jeweils einen Teil eines Gewindegangs ausbildende Vertiefungen (128) gebildet werden, wobei Steigungsverläufe (68) bei allen die Teilgewindegänge ausbildenden Vertiefungen (128) gleich sind, insbesondere dass die gleichen Steigungsverläufe (68) jeweils konstant sind oder dass die gleichen Steigungsverläufe sich ändern, insbesondere degressiv sind.

12. Tastmessgerät (2) nach einem der voranstehenden Ansprüche 10 bis 11,
**dadurch gekennzeichnet, dass**
die die Teilgewindegänge ausbildenden Vertiefungen (128) keinen gemeinsamen Gewindegang ausbilden und/oder dass zwischen den Teilgewindegängen eines Gewindesegments (126) Lücken ausgebildet sind.

13. Tastmessgerät (2) nach einem der voranstehenden Ansprüche 10 bis 12,
**dadurch gekennzeichnet, dass**
mindestens zwei oder mehrere, insbesondere alle, Gewindesegmente (126) gleich ausgebildet sind.

14. Tastmessgerät (2) nach einem der voranstehenden Ansprüche 10 bis 13,
**gekennzeichnet durch**
drei, insbesondere gleichmäßig in radialer Umfangsrichtung (62) auf der inneren Oberfläche (70) der Ausnehmung (124) verteilt angeordnete, Gewindesegmente (126).

15. Tastmessgerät (2) nach einem der voranstehenden Ansprüche 10 bis 14,
**gekennzeichnet durch**
einen andererends einen zweiten Verbindungs-/Kopplungsbereich (120) ausbildenden Zapfen (122), auf dessen äußeren Oberfläche (140) ein Außengewinde (134) ausgebildet ist oder eine andererends einen zweiten Verbindungs-/Kopplungsbereich (120) ausbildende Bohrung (152) mit eingesetzter Schraube (122) und/oder **durch** einen durchmesserverjüngten, im Wesentlichen zylindrischen Zwischenbereich (132) zwischen dem ersten und dem zweiten Verbindungs-/Kopplungsbereich (118, 120).

16. Tastmessgerät (2) nach einem der voranstehenden Ansprüche 10 bis 15,
**gekennzeichnet durch**
eine sich radial erstreckende Anlagefläche (136) für eine axiale Plananlage und/oder **durch** einen im Wesentlichen zylindrischen Teilabschnitt (138) für eine radiale Zentrierung.

17. Tastmessgerät (2) nach einem der voranstehenden Ansprüche 10 bis 16,
**gekennzeichnet durch**
eine radial federnde Struktur (148) auf einer äußeren Oberfläche (146) des Schraubeinsatzes (116), insbesondere im Bereich des ersten Verbindungs-/Kopplungsbereichs (118), wobei insbesondere die radial federnde Struktur (148) mittels Federklemmelemente (150) ausgebildet ist.

18. Tastmessgerät (2) nach einem der voranstehenden Ansprüche 1 bis 8 und 10 bis 17,
**gekennzeichnet durch**
eine Kupplungsanordnung (216) für einen Tasteinsatz (8) bei dem Tastmessgerät (2), wobei das Kupplungselement (16) nach einem der voranstehenden Ansprüche 1 bis 8 und der Schraubeinsatz (116) nach einem der voranstehenden Ansprüche 10 bis 17 sowie die Gewindesegmente (28) des Kupplungselements (16) und die Gewindesegmente (126) des Schraubeinsatzes (116) als korrespondierende, verschraubbare Innen-/Außengewinde ausgebildet sind.

19. Tastmessgerät (2) nach einem der voranstehenden Ansprüche 10-17,
**gekennzeichnet durch**
den Schraubeinsatz (116) nach einem der voranstehenden Ansprüche 10 bis 17 und einen Koppelarm/Messwelle (80), wobei der Schraubeinsatz (116) und der Koppelarm/Messwelle (80) miteinander verbunden sind, insbesondere miteinander verschraubt oder einstückig ausgebildet sind.

20. Tastmessgerät (2) nach einem der voranstehenden Ansprüche 1-8 und 10-17,
**gekennzeichnet durch**
das Kupplungselement (16) nach einem der voranstehenden Ansprüche 1 bis 8, den Schraubeinsatz (116) nach einem der voranstehenden Ansprüche 10 bis 17, einem Tasteinsatz (8), insbesondere einen eine Tastkugel (10), einen Stift (12) sowie eine Hülse (14) aufweisenden Tasteinsatz (8), und einen Koppelarm/Messwelle (80), wobei der Tasteinsatz (8) mittels des Kupplungselements (16) und des mit dem Kupplungselement (16) verbundenen Schraubeinsatzes (116) mit dem Koppelarm/Messwelle (80) verbunden ist, insbesondere dass die Gewindesegmente (28) des Kupplungselements (16) und die Gewindesegmente (126) des Schraubeinsatzes (116) als korrespondierende, verschraubbare Innen-/Außengewinde ausgebildet sind.

## Claims

1. Probe measuring apparatus (2), in particular 3D probe (2), comprising a coupling element (16) for receiving a probe tip (8) in the probe measuring apparatus (2), in particular the 3D probe (2), having a journal (24a) which, at one end, forms a first connecting/coupling region (18), wherein multiple thread segments (28) which do not adjoin one another in a radial circumferential direction (62) are formed on an outer surface (60) of the journal (24a).

2. Probe measuring apparatus (2) according to the preceding Claim 1,
**characterized in that**
the thread segments (28) are formed in each case by one or more depressions (30) which form in each case one part of a thread turn, wherein pitch profiles (68) are identical in all depressions (30) which form the partial thread turns, in particular **in that** the identical pitch profiles (68) are in each case constant or **in that** the identical pitch profiles change, in particular are degressive.

3. Probe measuring apparatus (2) according to either of the preceding claims,
**characterized in that**
gaps are formed between the partial thread turns of a thread segment (28).

4. Probe measuring apparatus (2) according to one of the preceding claims,
**characterized in that**
at least two or more, in particular all, thread segments (28) are of identical form.

5. Probe measuring apparatus (2) according to one of the preceding claims,
**characterized by**
three thread segments (28) which are in particular arranged so as to be distributed uniformly in a radial circumferential direction (62) on the outer surface (60) of the journal (24a).

6. Probe measuring apparatus (2) according to one of the preceding claims,
**characterized in that**
a recess (26a) which has an internal thread (34) is provided in the journal (24a) that forms the first connecting/coupling region (18).

7. Probe measuring apparatus (2) according to one of the preceding claims,
**characterized by**
a further journal (24b) which, at the other end, forms a second connecting/coupling region (20) and which has a further recess (26b), and/or by a radially extending abutment face (36) for axial planar abutment and/or a subsection (38), the outer circumference of which is non-circular in cross section, formed in particular by regions (50, 52) situated radially further towards the inside and radially further towards the outside.

8. Probe measuring apparatus (2) according to one of the preceding claims,
**characterized by**
a substantially cylindrical subsection (38), on the outer surface of which there is formed a radially outwardly bulged bead (40), which runs in at least partially, in particular fully, encircling fashion in a radial circumferential direction, for radial centring.

9. Probe measuring apparatus (2), in particular 3D probe (2), comprising a coupling element (16) for a probe tip (8) of the probe measuring apparatus (2), in particular of the 3D probe (2), having a journal (24a) which, at one end, forms a first connecting/coupling region (18), wherein an external thread having multiple turns is formed on an outer surface (60) of the journal (24a) .

10. Probe measuring apparatus (2), in particular 3D probe (2), comprising a screw insert (116) for connecting to a coupling element (16) for receiving a probe tip (8) in the probe measuring apparatus (2), in particular the 3D probe (2), having a first connecting/coupling region (118), which is formed at one end, in particular for connecting to a coupling element (16) according to one of the preceding Claims 1-8, having a recess (124), on the inner surface (70) of which there are formed multiple thread segments (126) which do not adjoin one another in a radial circumferential direction (62).

11. Probe measuring apparatus (2) according to the preceding Claim 10,
**characterized in that**
the thread segments (126) are formed in each case by one or more depressions (128) which form in each case one part of a thread turn, wherein pitch profiles (68) are identical in all depressions (128) which form the partial thread turns, in particular in that the identical pitch profiles (68) are in each case constant or **in that** the identical pitch profiles change, in particular are degressive.

12. Probe measuring apparatus (2) according to either of the preceding Claims 10 and 11,
**characterized in that**
the depressions (128) that form the partial thread turns do not form a common thread turn, and/or **in that** gaps are formed between the partial thread turns of a thread segment (126).

13. Probe measuring apparatus (2) according to one of the preceding Claims 10 to 12,
**characterized in that**
at least two or more, in particular all, thread segments (126) are of identical form.

14. Probe measuring apparatus (2) according to one of the preceding Claims 10 to 13,
**characterized by**
three thread segments (126) which are in particular arranged so as to be distributed uniformly in a radial circumferential direction (62) on the inner surface (70) of the recess (124).

15. Probe measuring apparatus (2) according to one of the preceding Claims 10 to 14,
**characterized by**
a journal (122) which, at the other end, forms a second connecting/coupling region (120) and on the outer surface (140) of which is formed an external thread (134), or a bore (152) which, at the other end, forms a second connecting/coupling region (120) and which has an inserted screw (122), and/or by a reduced-diameter, substantially cylindrical intermediate region (132) between the first and the second connecting/coupling region (118, 120).

16. Probe measuring apparatus (2) according to one of the preceding Claims 10 to 15,
**characterized by**
a radially extending abutment face (136) for axial planar abutment, and/or by a substantially cylindrical subsection (138) for radial centring.

17. Probe measuring apparatus (2) according to one of the preceding Claims 10 to 16,
**characterized by**
a radially resilient structure (148) on an outer surface (146) of the screw insert (116), in particular in the region of the first connecting/coupling region (118), wherein in particular the radially resilient structure (148) is formed by means of spring clamp elements (150).

18. Probe measuring apparatus (2) according to one of the preceding Claims 1 to 8 and 10 to 17,
**characterized by**
a coupling assembly (216) for a probe insert (8) in the probe measuring apparatus (2), wherein the coupling element (16) is formed according to one of the preceding Claims 1 to 8 and the screw insert (116) is formed according to one of the preceding Claims 10 to 17, and the thread segments (28) of the coupling element (16) and the thread segments (126) of the screw insert (116) are formed as corresponding internal/external threads that are able to be screwed to one another.

19. Probe measuring apparatus (2) according to one of the preceding Claims 10-17,
**characterized by**
the screw insert (116) according to one of the preceding Claims 10 to 17 and a coupling arm/measuring shaft (80), wherein the screw insert (116) and the coupling arm/measuring shaft (80) are connected to one another, in particular are screwed to one another or are integrally formed.

20. Probe measuring apparatus (2) according to one of the preceding Claims 1-8 and 10-17,
**characterized by**
the coupling element (16) according to one of the preceding Claims 1 to 8, the screw insert (116) according to one of the preceding Claims 10 to 17, a probe insert (8), in particular a probe insert (8) having a probe ball (10), a pin (12) and a sleeve (14), and a coupling arm/measuring shaft (80), wherein the probe insert (8) by means of the coupling element (16) and the screw insert (116) connected to the coupling element (16) is connected to the coupling arm/measuring shaft (80), in particular wherein the thread segments (28) of the coupling element (16) and the thread segments (126) of the screw insert (116) are formed as corresponding internal/external threads that are able to be screwed to one another.

## Revendications

1. Dispositif de mesure par palpage (2), notamment palpeur 3D (2), comprenant un élément d'accouplement (16) destiné à recevoir une pointe de palpage (8) dans le dispositif de mesure par palpage (2), notamment le palpeur 3D (2), ledit élément d'accouplement comprenant à une extrémité une broche (24a) formant un premier élément de liaison/d'accouplement (18), une pluralité de segments filetés (28) qui ne se rejoignent pas dans la direction circonférentielle radiale (62) étant formés sur une surface extérieure (60) de la broche (24a) .

2. Dispositif de mesure par palpage (2) selon la revendication 1 précédente, **caractérisé en ce que** les segments filetés (28) sont formés chacun par une ou plusieurs dépressions (30) qui forment chacune une partie d'un pas de filetage, les pentes (68) étant identiques pour toutes les dépressions (30) qui forment les parties de pas de filetage, en particulier **en ce que** les mêmes pentes (68) sont constantes ou **en ce que** les mêmes pentes varient, notamment sont dégressives.

3. Dispositif de mesure par palpage (2) selon l'une des revendications précédentes, **caractérisé en ce que** des espaces sont formés entre les parties de filetage d'un segment fileté (28).

4. Dispositif de mesure par palpage (2) selon l'une des revendications précédentes, **caractérisé en ce qu'**au moins deux segments filetés (28) ou plus, en particulier tous, sont conçus de manière identique.

5. Dispositif de mesure par palpage (2) selon l'une des revendications précédentes, **caractérisé par** trois segments filetés (28), disposés de manière répartie, notamment uniformément, dans la direction circonférentielle radiale (62) sur la surface extérieure (60) de la broche (24a).

6. Dispositif de mesure par palpage (2) selon l'une des revendications précédentes, **caractérisé en ce qu'**un évidement (26a) comportant un filetage intérieur (34) est prévu dans la broche (24a) formant la première zone de liaison/d'accouplement (18).

7. Dispositif de mesure par palpage (2) selon l'une des revendications précédentes, **caractérisé par** une autre broche (24b) qui forme à l'autre extrémité une deuxième zone de liaison/d'accouplement (20) et qui comprend un autre évidement (26b) et/ou par une surface d'appui (36) qui s'étend radialement et qui est destinée à réaliser un appui plan axial et/ou une portion (38) dont la circonférence extérieure est non circulaire en coupe transversale, en particulier formée par des zones (50, 52) situées radialement plus vers l'intérieur et radialement plus vers l'extérieur.

8. Dispositif de mesure par palpage (2) selon l'une des revendications précédentes, **caractérisé par** une portion sensiblement cylindrique (38) sur la surface extérieure de laquelle est formée un renflement (40) qui s'étend au moins partiellement, notamment complètement, dans le direction circonférentielle radiale et qui est bombé radialement vers l'extérieur pour effectuer un centrage radial.

9. Dispositif de mesure par palpage (2), en particulier palpeur 3D, comprenant un élément d'accouplement (16) destiné à une pointe de palpage (8) du dispositif de mesure par palpage (2), en particulier du palpeur 3D (2), ledit élément d'accouplement comprenant une broche (24a) formant une première zone de liaison/d'accouplement à une extrémité, un filetage extérieur à pas multiple étant formé sur une surface extérieure (60) de la broche (24a).

10. Dispositif de mesure par palpage (2), en particulier palpeur 3D (2), comprenant un insert fileté (116) destiné à être relié à un élément d'accouplement (16) et à recevoir une pointe de palpage (8) dans le dispositif de mesure par palpage (2), en particulier le palpeur 3D (2), ledit insert fileté comprenant une première zone de liaison/d'accouplement (118) formée à une extrémité, en particulier destinée à être reliée à un élément d'accouplement (16) selon l'une des revendications précédentes 1 à 8, et un évidement (124) sur la surface intérieure (70) duquel sont formés plusieurs segments filetés (126) qui ne se rejoignent pas dans la direction circonférentielle radiale (62).

11. Dispositif de mesure par palpage (2) selon la revendication précédente 10, **caractérisé en ce que** les segments filetés (126) sont formés chacun par une ou plusieurs dépressions (128) formant chacune partie d'un pas de filetage, les pentes (68) étant identiques pour toutes les dépressions (128) qui forment les parties de pas de filetage, en particulier **en ce que** les mêmes pentes (68) sont constantes ou **en ce que** les mêmes pentes varient, notamment sont dégressives.

12. Dispositif de mesure par palpage (2) selon l'une des revendications précédentes 10 à 11, **caractérisé en ce que** les dépressions (128) qui forment les parties de pas de filetage ne forment pas un pas de filetage commun et/ou **en ce que** des espaces sont ménagés entre les parties de pas de filetage d'un segment fileté (126) .

13. Dispositif de mesure par palpage (2) selon l'une des revendications précédentes 10 à 12, **caractérisé en ce qu'**au moins deux segments filetés (126) ou plus, en particulier tous, sont conçus de manière identique.

14. Dispositif de mesure par palpage (2) selon l'une des revendications précédentes 10 à 13, **caractérisé par** trois segments filetés (126) qui sont disposés de manière répartie, notamment uniformément, dans la direction circonférentielle radiale (62) sur la surface intérieure (70) de l'évidement (124).

15. Dispositif de mesure par palpage (2) selon l'une des revendications précédentes 10 à 14, **caractérisé par** une broche (122) qui forme à l'autre extrémité une deuxième zone de liaison/d'accouplement (120) sur la surface extérieure (140) de laquelle est formé un filetage extérieur (134) ou un trou (152) qui forme à l'autre extrémité une deuxième zone de liaison/d'accouplement (120) avec une vis insérée (122) et/ou par une zone intermédiaire (132) sensiblement cylindrique, de diamètre décroissant, entre les première et deuxième zones de liaison/d'accouplement (118, 120).

16. Dispositif de mesure par palpage (2) selon l'une des revendications précédentes 10 à 15, **caractérisé par** une surface d'appui (136) qui s'étend radialement et qui est destinée à réaliser un appui plan axial et/ou par une portion sensiblement cylindrique (138) destinée à un centrage radial.

17. Dispositif de mesure par palpage (2) selon l'une des revendications précédentes 10 à 16, **caractérisé par** une structure radialement élastique (148) sur une surface extérieure (146) de l'insert fileté (116), en particulier au niveau de la première zone de liaison/d'accouplement (118), la structure radialement élastique (148) étant en particulier formée au moyen d'éléments de serrage à ressort (150).

18. Dispositif de mesure par palpage (2) selon l'une des revendications précédentes 1 à 8 et 10 à 17, **caractérisé par** un ensemble d'accouplement (216) destiné à un insert de palpage (8) dans le dispositif de mesure par palpage (2), l'élément d'accouplement (16) selon l'une des revendications précédentes 1 à 8 et l'insert fileté selon l'une des revendications précédentes 10 à 17 ainsi que les segments filetés (28) de l'élément d'accouplement (16) et les segments filetés (126) de l'insert filetés (116) étant conçus comme des filetages intérieurs/extérieurs correspondants pouvant être vissés.

19. Dispositif de mesure par palpage (2) selon l'une des revendications précédentes 10 à 17, **caractérisé par** l'insert fileté (116) selon l'une des revendications précédentes 10 à 17 et un bras d'accouplement/arbre de mesure (80), l'insert fileté (116) et le bras d'accouplement/arbre de mesure (80) étant reliés, en particulier vissés, l'un à l'autre ou formés d'une seule pièce.

20. Dispositif de mesure par palpage (2) selon l'une des revendications précédentes 1 à 8 et 10 à 17, **caractérisé par** l'élément d'accouplement (16) selon l'une des revendications précédentes 1 à 8, l'insert fileté (116) selon l'une des revendications précédentes 10 à 17, un insert de palpage (8), en particulier un insert de palpage (8) comportant une bille de palpage (10), une tige (12) et une douille (14), et un bras d'accouplement/arbre de mesure (80), l'insert de palpage (8) étant relié au bras d'accouplement/à l'arbre de mesure (80) au moyen de l'élément d'accouplement (16) et de l'insert fileté (116) relié à l'élément d'accouplement (16), et les segments filetés (28) de l'élément d'accouplement (16) et les segments filetés (126) de l'insert fileté (116) étant conçus en particulier comme des filetages intérieurs/extérieurs correspondants pouvant être vissés.
